# EUROPÄISCHE PATENTSCHRIFT

(11) **EP 1 024 686 B1**
(45) Veröffentlichungstag und Bekanntmachung des Hinweises auf die Patenterteilung: **11.07.2001**
(21) Anmeldenummer: 98952727.0
(22) Anmeldetag: 21.10.1998
(51) Int. Cl.: A01B 69/08, A01C 15/00

(54) **LANDWIRTSCHAFTLICHE MASCHINE**
AGRICULTURAL MACHINERY
MACHINE AGRICOLE

(30) Priorität: 23.10.1997 DE 19746927
(43) Veröffentlichungstag der Anmeldung: 09.08.2000
(73) Patentinhaber: Horsch Maschinen GmbH, 92421 Schwandorf (DE)
(72) Erfinder: HORSCH, Michael, D-92421 Schwandorf (DE)
(74) Vertreter: Dendorfer, Claus, Dr.
(86) Internationale Anmeldenummer: EP9806672
(87) Internationale Veröffentlichungsnummer: WO9921405

(56) Entgegenhaltungen:
- DE-A- 19 531 172
- FR-A- 2 274 209
- FR-A- 2 399 197
- US-A- 4 247 129
- US-A- 4 558 882

## Beschreibung

Die Erfindung betrifft eine landwirtschaftliche Maschine nach dem Oberbegriff des Anspruchs 1. Insbesondere betrifft die Erfindung eine Maschine zur Bodenbearbeitung und/oder Bodenbehandlung, zum Beispiel eine Sämaschine.

Die FR 23 99 197 zeigt ein landwirtschaftliches Gerät mit den Merkmalen des Oberbegriffs von Anspruch 1.

Aus der DE 195 31 172 A1 ist eine Sämaschine bekannt, bei der ein dreieckiger Vorratsbehälter auf einem Rahmengestell angebracht ist, das ein gleichschenkliges Dreieck bildet. An den die Basis des Rahmengestells begrenzenden Ecken ist je ein Paar Haupträder angeordnet. Jedes Haupträderpaar ist um eine vertikale Achse schwenkbar, die einen kleinsten Abstand von etwa 40 cm zu der horizontalen Achse des Haupträderpaares hat. Dadurch werden die Haupträderpaare ähnlich wie bei einem Einkaufswagen nachgeschleppt, so daß sie der Bewegungsrichtung der Sämaschine folgen.

Die FR 20 34 151 zeigt ein landwirtschaftliches Gerät, das zum Beispiel für den Rübenanbau eingesetzt werden kann. Das Gerät weist ein Rahmengestell mit schwenkbaren Hinterrädern auf. Die Hinterräder sind über Seilzüge mit einer ebenfalls schwenkbaren Deichsel verbunden und werden in Abhängigkeit von der Winkelstellung der Deichsel zwangsgelenkt. Durch diese Anordnung soll bei der Bearbeitung eines abfallenden Geländes quer zur Hangrichtung sichergestellt werden, daß sich das landwirtschaftliche Gerät in einer Linie mit einem Schlepper ausrichtet.

Die aus der DE 195 31 172 A1 bekannte Anordnung hat jedoch den Nachteil, daß die Haupträder bei Kurvenfahrten ausschwenken und einen Kreisbogen mit relativ großem Durchmesser durchlaufen, wie dies in Fig. 1 der DE 195 31 172 A1 durch eine gestrichelte Linie angedeutet ist. Daher muß baulich entsprechend viel Freiraum für die Haupträder vorgesehen werden. Dies ist insbesondere dann problematisch, wenn ein großer und schwerer Vorratsbehälter eingesetzt werden soll. In diesem Fall müssen entsprechend große und breite Haupträder verwendet werden, um die Bodenpressung nicht zu groß werden zu lassen. Wenn die Haupträder zusätzlich noch weit ausschwenken, muß insgesamt eine sehr große und unhandlichen Maschine gebaut werden, die keine engen Kurvenfahrten zuläßt.

Es ist demgemäß Aufgabe der Erfindung, die genannten Probleme zu vermeiden und eine landwirtschaftliche Maschine bereitzustellen, die insbesondere auch bei einem großen Vorratsbehälter möglichst kompakt und manövrierfähig ist.

Erfindungsgemäß wird diese Aufgabe durch eine Maschine mit den Merkmalen des Anspruchs 1 gelöst. Die abhängigen Ansprüche betreffen bevorzugte Weiterbildungen der Erfindung.

Die Erfindung beruht auf der Grundidee, das mindestens eine Hauptrad der Maschine entsprechend der Richtung einer auf die Maschine ausgeübten Zugkraft zwangszulenken. Dadurch ist es möglich, die Lenkachse des Hauptrades beispielsweise so anzuordnen, daß sie zentral durch das Hauptrad verläuft. Eine Lenkbewegung um diese Achse benötigt erheblich weniger Platz als die kreisbogenförmige Schwenkbewegung bei der aus der DE 195 31 172 A1 bekannten Maschine. Außerdem wird durch die Zwangslenkung insgesamt das Fahrverhalten der Maschine bei engen Kurvenfahrten verbessert.

Bei der erfindungsgemäßen Maschine ist die Deichsel an dem Rahmengestell angeordnet. Insbesondere kann die Deichsel als integraler Teil des Rahmengestells ausgebildet sein oder starr mit dem Rahmengestell verbunden sein. Bevorzugt ist die Deichsel jedoch an dem Rahmengestell schwenkbar angebracht. Die Schwenkachse der Deichsel verläuft vorzugsweise ungefähr vertikal, so daß sich die Deichsel entsprechend der Schlepprichtung der Maschine ausrichtet. Diese Anordnung ist besonders vorteilhaft, weil dadurch der Verbindungspunkt der Deichsel mit einem Schlepper bei einer Kurvenfahrt zum Kurveninneren hin auswandert. Dadurch erhält der Schlepper bei einer engen Kurvenfahrt zusätzlichen Freiraum. Bei einer starr angeordneten Deichsel bestünde dagegen die Gefahr, daß das kurveninnere Hinterrad des Schleppers an den Vorratsbehälter anstößt.

In bevorzugten Ausgestaltungen der Ausführungsformen mit beweglicher Deichsel wird die Schwenkbewegung der Deichsel zur Zwangslenkung des Hauptrades oder der Haupträder ausgenutzt. Damit lassen sich die genannten Vorteile mit sehr geringem baulichen Aufwand erzielen. Bevorzugt wird die Schwenkbewegung der Deichsel durch ein geeignetes Lenkgestänge in eine Lenkbewegung des Laufrades umgesetzt. Das Lenkgestänge kann mehrere Verbindungsglieder, insbesondere Zug- und/oder Schubstangen oder Hebel aufweisen. In anderen Ausführungsformen wird die Lenkbewegung dadurch erzeugt, daß die Maschine an zwei Punkten an den Schlepper angehängt ist. Das Hauptrad oder die Haupträder können jedoch auch durch eine elektrische oder hydraulische Einrichtung zwangsgelenkt werden.

Vorzugsweise besteht eine (nicht notwendigerweise lineare) Abhängigkeit zwischen dem Verschwenkungswinkel der Deichsel und dem Lenkwinkel des Hauptrades oder den (nicht notwendigerweise identischen) Lenkwinkeln der Haupträder. Bevorzugt erfolgt die Lenkbewegung gleichsinnig mit dem Zugwinkel oder insbesondere um ungefähr den gleichen Winkel wie der Zugwinkel, so daß besonders gute Kurveneigenschaften erzielt werden.

Der Vorratsbehälter verjüngt sich vorzugsweise zur Deichsel hin und weist zumindest abschnittsweise einen dreieckigen oder trapezförmigen Grundriß auf, um möglichst viel Raum für Kurvenfahrten des Schleppers zu bieten. Insbesondere bei Vorratsbehältern, die relativ groß und dadurch in beladenem Zustand schwer sind, ist das mindestens eine Hauptrad bevorzugt mit einem Breitreifen versehen, um die Bodenpressung zu vermindern. Der Reifen weist vorzugsweise eine Breite von mehr als 50 % oder mehr als 60 % seines Durchmessers auf. Beispielsweise kann der Reifen 0,5 m bis 1,2 m (insbesondere 0,8 m) breit sein und/oder im Durchmesser 0,7 m bis 2,0 m (insbesondere 1,35 m) messen. Bei solchen großen Reifenabmessungen ist die erfindungsgemäße Maßnahme der Zwangslenkung besonders wichtig, um ein zu weites Ausscheren des oder der Breitreifen zu verhindern.

In weiteren bevorzugten Ausführungsformen sind mindestens zwei Haupträder vorgesehen, und das Rahmengestell und/oder die Deichsel sind/ist zumindest teilweise zwischen diesen angeordnet. Wenn das Rahmengestell relativ schmal ist und vorzugsweise nicht seitlich über den Vorratsbehälter herausragt, läßt sich dadurch die Bewegungsfreiheit für Kurvenfahrten des Schleppers weiter erhöhen. Auch in diesem Fall ist es wichtig, daß zwischen den Haupträdern genug Platz vorhanden ist, um ein hinreichend biegesteifes Rahmengestell und/oder eine hinreichend biegesteife Deichsel hindurchführen zu können.

In bevorzugten Ausführungsformen weist die Maschine eine landwirtschaftliche Vorrichtung auf, die als Bodenbearbeitungs- und/oder Bodenbehandlungsvorrichtung ausgestaltet sein kann und mehrere Stützräder aufweisen kann. Beispielsweise kann die Maschine eine Sämaschine sein, der Vorratsbehälter kann ein Saatgutbehälter sein, und die landwirtschaftliche Vorrichtung kann eine Sävorrichtung und ein nachgeschaltetes Gerät, beispielsweise einen Striegel oder einen Grubber, aufweisen. Für andere Einsatzzwecke kann der Vorratsbehälter beispielsweise ein Flüssigkeitsbehälter oder ein Streugutbehälter sein.

Ein Ausführungsbeispiel der Erfindung und mehrere Ausführungsalternativen werden nun anhand der schematischen Zeichnungen genauer beschrieben. Es stellen dar:
Fig. 1 eine Draufsicht auf die Maschine,
Fig. 2 eine Draufsicht auf das Rahmengestell, die Deichsel und die Haupträcer der Maschine,
Fig. 3 eine Seitenansicht der in Fig. 2 gezeigten Bauteile der Maschine sowie des Vorratsbehälters, und
Fig. 4 eine Ansicht wie in Fig. 2 während einer Kurvenfahrt der Maschine.

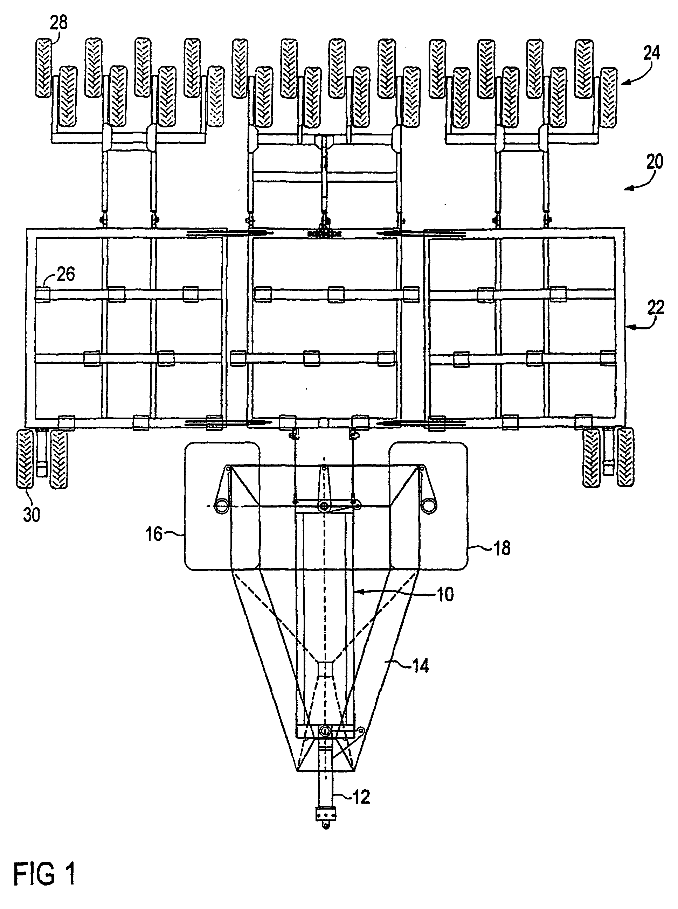

Die in Fig. 1 dargestellte landwirtschaftliche Maschine ist eine schleppergezogene Sämaschine für eine große Arbeitsbreite. Ein Rahmengestell 10 ist als im wesentlichen rechteckiger Hohlprofilrahmen mit einer Länge von ungefähr 2,5 m und etwa 0,6 m Breite ausgebildet. An der in Schlepprichtung vorderen Schmalseite des Rahmengestells 10 ist eine Deichsel 12 schwenkbar angebracht. Die Deichsel 12 ist als Kurzdeichsel mit einer Länge von etwa 1,0 m ausgebildet und dient zum Ankoppeln eines Schleppers (nicht gezeigt).

Auf dem Rahmengestell 10 ist in dem hier beschriebenen Ausführungsbeispiel ein Vorratsbehälter 14 für Saatgut lösbar und austauschbar angebracht. Der Vorratsbehälter 14 verjüngt sich zur Deichsel 12 hin, damit die Hinterräder des Schleppers selbst bei engen Kurvenfahrten nicht an die Seitenwände des Vorratsbehälters 14 anstoßen. Genauer gesagt, hat der zur Deichsel 12 gewandte Abschnitt des Vorratsbehälters 14 einen trapezförmigen Grundriß, während der von der Deichsel 12 abgewandte Abschnitt des Vorratsbehälters 14 einen rechteckigen Grundriß aufweist.

Zwei Haupträder 16, 18 sind mit je einem Breitreifen mit einer Breite von 0,8 m und einem Durchmesser von 1,35 m versehen. Die Haupträder 16, 18 sind lenkbar mit dem Rahmengestell 10 verbunden, wie dies später noch genauer erläutert ' werden wird. Ein hinterer Abschnitt des Rahmengestells 10 einschließlich dessen hinterer Schmalseite befindet sich zwischen den beiden Haupträdern 16, 18 und hat von diesen genügend Abstand, um die Haupträder 16, 18 bei keinem zulässigen Lenkwinkel zu behindern.

Das Rahmengestell 10 ist an seiner hinteren Schmalseite über zwei Verbindungsstücke mit einer landwirtschaftlichen Vorrichtung 20 lösbar verbunden. Die landwirtschaftliche Vorrichtung 20 weist in dem hier gezeigten Ausführungsbeispiel eine Sävorrichtung 22 auf, der ein als Striegel ausgebildetes Gerät 24 nachgeschaltet ist. Die Sävorrichtung 22 weist eine Vielzahl von Säeinheiten (eine davon ist in Fig. 1 mit 26 bezeichnet) auf. Jeder Säeinheit 26 ist ein hinteres Stützrad (in Fig. 1 beispielhaft mit 28 bezeichnet) des Striegels zugeordnet. Die hinteren Stützräder 28 bilden, obwohl sie paarweise etwas versetzt angeordnet sind, ungefähr eine Reihe, durch deren Mitte bei Kurvenfahrten die vertikale Schwenkachse der gesamten Maschine verläuft. Ferner weist die Sävorrichtung 22 mehrere vordere Stützräder (in Fig. 1 beispielhaft mit 30 bezeichnet) auf.

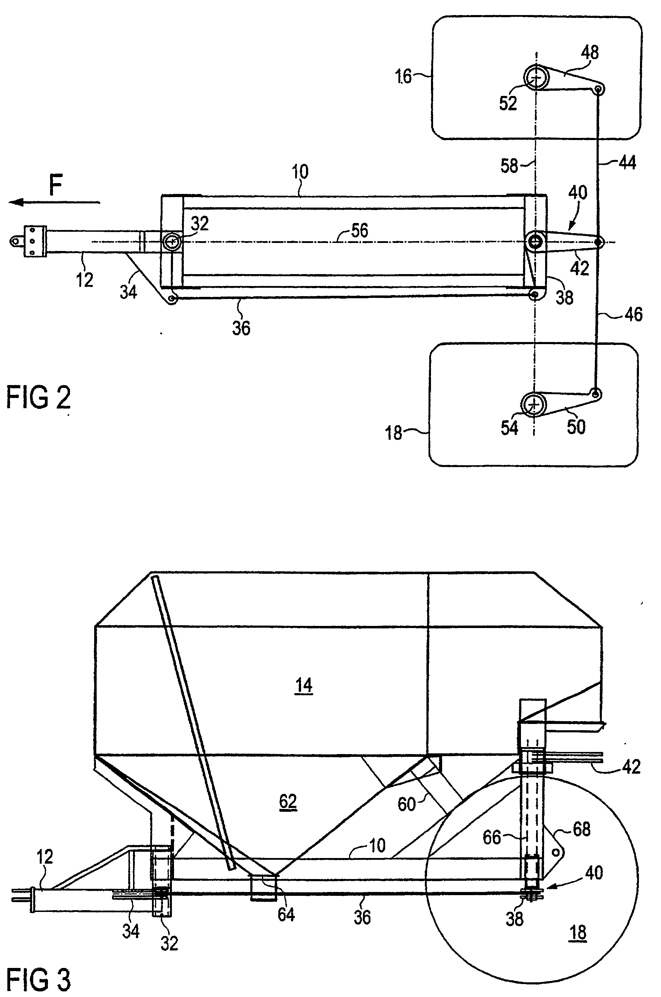

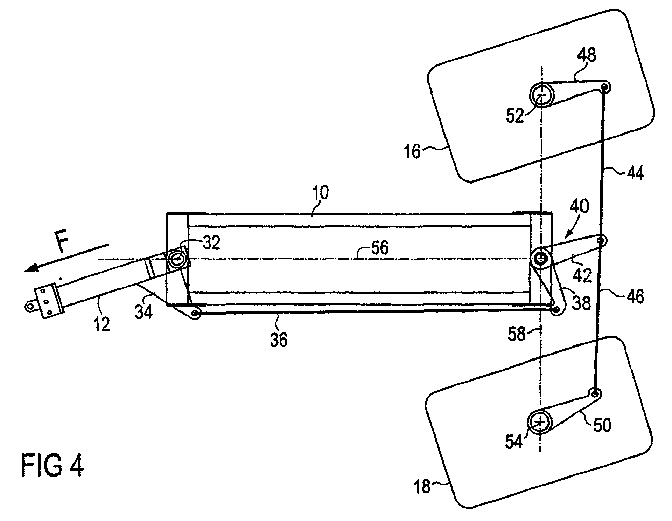

Wie in Fig. 2 und Fig. 4 genauer gezeigt ist, ist die Deichsel 12 um eine zur Zeichenebene senkrechte Achse 32 schwenkbar. Die Deichsel 12 weist einen Hebelansatz 34 auf, der über eine Lenkstange 36 mit einem ersten Hebelarm 38 eines zweiarmigen Zwischenhebels 40 verbunden ist. Der zweite Hebelarm 42 des Zwischenhebels 40 steht über zwei Spurstangen 44, 46 mit je einem Lenkhebel 48, 50 in Verbindung. Die Haupträder 16, 18 sind mittels der Lenkhebel 48, 50 lenkbar. Genauer gesagt, können die Haupträder 16, 18 durch ein Verschwenken der Lenkhebel 48, 50 um je eine zur Zeichenebene senkrechte Lenkachse 52, 54 geschwenkt werden.

Ferner sind in Fig. 2 und Fig. 4 eine Längsachse 56 des Rahmengestells 10 und eine Querachse 58 als strichpunktierte Linien eingezeichnet. Die Querachse 58 entspricht dem Verlauf einer (nicht gezeigten) Achskonstruktion, durch die die beiden Haupträder 16, 18 mit dem Rahmengestell 10 verbunden sind. Die Querachse 58 schneidet die Lenkachsen 52, 54 je ungefähr im Zentrum der Haupträder 16, 18.

Fig. 2 stellt eine Situation dar, in der die landwirtschaftliche Maschine von dem Schlepper in Geradeausfahrt gezogen wird. Die auf die Deichsel 12 ausgeübte Zugkraft F verläuft daher in einer Linie mit der Längsachse 56. Das aus den Bauteilen 34, 36, 38, 40, 42, 44, 46, 48 und 50 gebildete Lenkgestänge ist so ausgelegt, daß in diesem Fall auch die Laufrichtung der beiden Haupträder 16, 18 ungefähr in Richtung der Längsachse 56 liegt.

Bei der in Fig. 4 gezeigten Situation durchfährt der Schlepper eine Linkskurve. Die auf die Deichsel 12 ausgeübte Zugkraft F weicht um einen Winkel von etwa 20° von der Richtung der Längsachse 56 ab. Dementsprechend ist die Deichsel 12 um etwa diesen Winkel gegen den Uhrzeigersinn verschwenkt. Über die Lenkstange 36, den Zwischenhebel 40 und die Spurstangen 44, 46 werden auch die Haupträder 16, 18 gleichsinnig und um ungefähr den gleichen Winkel verschwenkt. Damit folgt der Lenkwinkel dem Zugwinkel der Zugkraft F oder, in dem hier beschriebenen Ausführungsbeispiel, dem Verschwenkungswinkel der Deichsel 12.

Aus Fig. 4 ist ferner ersichtlich, daß der Anhängepunkt der Deichsel 12 an den Schlepper einen Abstand zur Längsachse 56 aufweist. Der Schlepper gewinnt somit mehr Bewegungsfreiheit, um auch sehr enge Kurvenradien zu fahren, ohne daß ein Hinterrad des Schleppers an den Vorratsbehälter 14 anstößt. Im Extremfall kann der Schlepper fast rechtwinklig zur Längsachse 56 stehen, wobei der maximale Verschwenkungswinkel der Deichsel 12 durch geeignete Anschläge begrenzt ist.

In Ausführungsalternativen der landwirtschaftlichen Maschine sind das Rahmengestell 10 und die Deichsel 12 anders dimensioniert. Beispielsweise kann die Deichsel 12 länger ausgebildet sein und erst ungefähr bei der Querachse 58 schwenkbar mit dem Rahmengestell 10 verbunden sein. Das Rahmengestell 10 braucht sich dann nicht so weit zum Schlepper hin zu erstrecken und kann bis auf die Achskonstruktion für die beiden Haupträder 16, 18 reduziert sein. In weiteren Ausführungsalternativen kann die Deichsel 12 starr mit dem Rahmengestell 10 verbunden sein.

Ferner ist in Ausführungsalternativen die Lenkstange 36 nicht an dem Hebelansatz 34 der Deichsel 12 angelenkt, sondern bis zum Schlepper geführt. Am Schlepper sind dann zwei mit Abstand voneinander angeordnete Anhängepunkte für die Deichsel 12 beziehungsweise die verlängerte Lenkstange 36 vorgesehen. Der Abschnitt des Schleppers zwischen diesen beiden Anhängepunkten übernimmt die Funktion des Hebelansatzes 34, indem bei einer Kurvenfahrt des Schleppers die Lenkstange 36 relativ zur Deichsel 12 in Längsrichtung verschoben wird. Diese Ausführungsalternativen sind insbesondere zur Verwendung mit einer Deichsel 12 geeignet, die starr oder um einen relativ schlepperfernen Drehpunkt verschwenkbar ist.

Aus der Darstellung von Fig. 3 ist nochmals die Ausgestaltung des Vorratsbehälters 14 ersichtlich, der sich auf einen Träger 60 des Rahmengestells 10 abstützt. Ein trichterförmig verjüngter Abschnitt 62 des Vorratsbehälters 14 mündet in einen Auslaß 64, an den beispielsweise eine Dosiereinrichtung für Saatgut angeschlossen ist. Ferner zeigt Fig. 3 den Aufbau des Zwischenhebels 40, bei dem die beiden Hebelarme 38, 42 in unterschiedlichen Höhen angeordnet und über ein Rohr 66 miteinander verbunden sind. Das Rohr 66 ist seinerseits in einem senkrechten Abschnitt des Rahmengestells 10 drehbar gelagert. Durch diesen Aufbau verlaufen sowohl die Lenkstange 36 als auch die beiden Spurstangen 44, 46 ungefähr waagrecht. Schließlich ist in Fig. 3 ein Befestigungsflansch 68 zum Anhängen der landwirtschaftlichen Vorrichtung 20 dargestellt.

## Patentansprüche

1. Landwirtschaftliche Maschine, insbesondere Sämaschine, mit:
- einem fahrbaren Rahmengestell (10), das mindestens ein Hauptrad (16, 18) aufweist,
- einer an dem Rahmengestell (10) angeordneten Deichsel (12),
- einem Vorratsbehälter (14), und
- einer in Fahrtrichtung hinten an dem Rahmengestell (10) angebrachten landwirtschaftlichen Vorrichtung (20), wobei
- das mindestens eine Hauptrad (16, 18) in Abhängigkeit von einer Zugrichtung einer auf die Deichsel (12) ausgeübten Zugkraft (F) zwangsgelenkt ist,
dadurch gekennzeichnet, daß
- der Vorratsbehälter (14) von dem Rahmengestell (10) und/oder der Deichsel (12) getragen ist, und daß
- die landwirtschaftliche Vorrichtung (20) mehrere hintere Stützräder (28) aufweist, die hinten an der landwirtschaftlichen Vorrichtung (20) angeordnet sind.

2. Maschine nach Anspruch 1,
dadurch gekennzeichnet, daß die Deichsel (12) an dem Rahmengestell (10) um eine vertikale Achse (32) schwenkbar angebracht ist.

3. Maschine nach Anspruch 2,
dadurch gekennzeichnet, daß der Verschwenkungswinkel der Deichsel (12) den Lenkwinkel des mindestens einen Hauptrades (16, 18) bestimmt.

4. Maschine nach Anspruch 3,
dadurch gekennzeichnet, daß ein Lenkgestänge (34, 36, 38, 40, 42, 44, 46, 48, 50) vorgesehen ist, um eine Schwenkbewegung der Deichsel (12) zu dem mindestens einen Hauptrad (16, 18) zu übertragen.

5. Maschine nach einem der Ansprüche 1 bis 4,
dadurch gekennzeichnet, daß der Vorratsbehälter (14) sich zur Deichsel (12) hin verjüngt und insbesondere einen abschnittsweise dreieckigen oder abschnittsweise trapezförmigen Grundriß aufweist.

6. Maschine nach einem der Ansprüche 1 bis 5,
dadurch gekennzeichnet, daß das mindestens eine Hauptrad (16, 18) einen Breitreifen aufweist.

7. Maschine nach einem der Ansprüche 1 bis 6,
dadurch gekennzeichnet, daß der Reifen des mindestens einen Hauptrades (16, 18) eine Breite von 0,5 m bis 1,2 m und/oder einen Durchmesser von 0,7 m bis 2,0 m aufweist.

8. Maschine nach einem der Ansprüche 1 bis 7,
dadurch gekennzeichnet, daß das Rahmengestell (10) und/oder die Deichsel (12) zumindest teilweise zwischen mindestens zwei Haupträdern (16, 18) angeordnet ist.

9. Maschine nach einem der Ansprüche 1 bis 8,
dadurch gekennzeichnet, daß die landwirtschaftliche Vorrichtung (20) eine Sävorrichtung (22) und ein nachgeschaltetes Gerät (24) aufweist.

## Claims

1. Agricultural machine, in particular sowing machine, having:
- a movable rack (10) which has at least one main wheel (16, 18),
- a hitch (12) which is arranged on the rack (10),
- a reservoir container (14), and
- an agricultural implement (20) which is attached to the rack (10) at the rear in the direction of travel, wherein
- the at least one main wheel (16, 18) is positively steered as a function of the pulling direction of a traction force (F) which is exerted on the hitch (12),
characterized in that
- the reservoir container (14) is carried by the rack (10) and/or the hitch (12), and in that
- the agricultural implement (20) has a plurality of rear support wheels (28) which are arranged at the rear of the agricultural implement (20).

2. The machine as claimed in claim 1,
characterized in that the hitch (12) is attached to the rack (10) so as to be capable of pivoting about a vertical axis (32).

3. The machine as claimed in claim 2,
characterized in that the pivot angle of the hitch (12) determines the steering angle of the at least one main wheel (16, 18).

4. The machine as claimed in claim 3,
characterized in that a steering linkage (34, 36, 38, 40, 42, 44, 46, 48, 50) is provided in order to transmit a pivoting movement of the hitch (12) to the at least one main wheel (16, 18).

5. The machine as claimed in one of claims 1 to 4,
characterized in that the reservoir container (14) tapers toward the hitch (12) and has, in particular, a horizontal projection which is triangular in certain sections or trapezoidal in certain sections.

6. The machine as claimed in one of claims 1 to 5,
characterized in that the at least one main wheel (16, 18) has a wide tire.

7. The machine as claimed in one of claims 1 to 6,
characterized in that the tire of the at least one main wheel (16, 18) has a width of 0,5 m to 1,2 m and/or a diameter of 0,7 m to 2,0 m.

8. The machine as claimed in one of claims 1 to 7,
characterized in that the rack (10) and/or the hitch (12) are/is arranged at least partially between at least two main wheels (16, 18).

9. The machine as,claimed in one of claims 1 to 8,
characterized in that the agricultural implement (20) has a sowing implement (22) and an implement (24) which is connected behind.

## Revendications

1. Machine agricole, en particulier semoir, comportant :
- un châssis roulant (10) pourvu d'au moins une roue principale (16, 18),
- un timon (12) disposé sur le châssis (10),
- un réservoir (14) et
- un dispositif agricole (20) monté à l'arrière du châssis (10), dans le sens de marche, étant précisé que
- la ou les roues principales (16, 18) sont soumises à un guidage forcé en fonction d'un sens de traction d'une force de traction (F) exercée sur le timon (12),
caractérisée en ce que
- le réservoir (14) est porté par le châssis (10) et/ou le timon (12), et en ce que
- le dispositif agricole (20) comporte plusieurs roues supports arrière (28) qui sont disposées à l'arrière du dispositif agricole (20).

2. Machine selon la revendication 1, caractérisée en ce que le timon (12) est monté sur le châssis (10) de manière à pouvoir pivoter autour d'un axe vertical (32).

3. Machine selon la revendication 2, caractérisée en ce que l'angle de pivotement du timon (12) définit l'angle de braquage de la ou des roues principales (16, 18).

4. Machine selon la revendication 3, caractérisée en ce qu'il est prévu une timonerie (34, 36, 38, 40, 42, 44, 46, 48, 50) pour transmettre un mouvement pivotant du timon (12) à la ou aux roues principales (16, 18).

5. Machine selon l'une des revendications 1 à 4, caractérisée en ce que le réservoir (14) va en rétrécissant vers le timon (12) et présente en particulier, sur une section, une forme triangulaire ou trapézoïdale, vu en plan.

6. Machine selon l'une des revendications 1 à 5, caractérisée en ce que la ou les roues principales (16, 18) présentent un pneu large.

7. Machine selon l'une des revendications 1 à 6, caractérisée en ce que le pneu de la ou des roues principales (16, 18) présente une largeur de 0,5 m à 1,2 m et/ou un diamètre de 0,7 m à 2,0 m.

8. Machine selon l'une des revendications 1 à 7, caractérisée en ce que le châssis (10) et/ou le timon (12) sont disposés au moins en partie entre au moins deux roues principales (16, 18).

9. Machine selon l'une des revendications 1 à 8, caractérisée en ce que le dispositif agricole (20) comporte un semoir (22) et un appareil (24) monté en aval.
